# NOUVEAU FASCICULE DE BREVET EUROPEEN

(11) **EP 0 448 936 B2**
(45) Date de publication et mention de la décision concernant l'opposition: **25.11.1998**
(45) Mention de la délivrance du brevet: 13.10.1993
(21) Numéro de dépôt: 91101395.1
(22) Date de dépôt: 02.02.1991
(51) Int. Cl.: A63C 5/12, A63C 9/00

(54) **Procédé d'assemblage d'une pièce rapportée et d'un engin de glisse sur neige et ensemble constitué par un engin de glisse et une pièce rapporteé**
Verfahren zur Herstellung eines skiähnlichen Sportgeräts und einer Längsführungsvorrichtung und Zusammenbau eines Sportgeräts und einer Längsführungsvorrichtung
Method of joining a support device and a ski and a combination of a support device and a ski

(30) Priorité: 26.03.1990 FR 9003824
(43) Date de publication de la demande: 02.10.1991
(73) Titulaire: SALOMON S.A., 74370 Pringy (FR)
(72) Inventeur: Szafranski, Pierre, Metz-Tessy, F-74370 Pringy (FR); Cazaillon, Jean-Mary, F-74000 Cran Gevrier (FR)

(56) Documents cités:
- AT-C- 270 466
- DE-C- 3 818 569
- FR-A- 2 615 406
- FR-A- 2 627 700
- US-A- 3 920 504
- US-A- 3 977 688
- US-A- 4 058 421
- WELDING AND METAL FABRICATION, vol. 57, no. 4, mai 1989, pages 152-154; I.ROBINSON: "Linear vibration welding of non metallic components"
- "Heizelementschweissen in der Serienfertigung", Ernst Pecha, VDI-Verlag GmbH, 1977, page 101

## Description

La présente invention concerne un procédé d'assemblage d'un élément de fixation et d'un engin de glisse sur neige, ainsi qu'à l'ensemble engin/élément de fixation obtenu par la mise en oeuvre de ce procédé.

Les engins de glisse sur neige tels qu'un ski alpin, un ski de fond, un ski de saut, un monoski, une planche de surf sur neige etc, comportent en général un élément de base plat et allongé, glissant sur la neige, et au moins une pièce rapportée fixée sur la surface supérieure de l'élément de base ou à l'une des extrémités du ski. La pièce rapportée peut être constituée par une partie d'une fixation de sécurité, maintenant une chaussure d'un skieur, une glissière longitudinale sur laquelle est monté le corps proprement dit d'une fixation, un étrier ou un taquet de maintien d'une glissière, etc...... .

Jusqu'à présent ces pièces rapportées ont été fixées, sur la surface supérieure de l'engin de glisse, au moyen de vis traversant des trous percés dans la pièce rapportée et vissées dans des trous borgnes percés préalablement dans la surface supérieure de l'engin. Ce procédé d'assemblage d'une pièce rapportée sur un engin de glisse a été généralement adopté car il était apparu comme étant le seul permettant d'assurer la sécurité maximale pour le skieur du fait de l'impossibilité, en pratique, d'une séparation intempestive entre la pièce rapportée et l'engin de glisse. Toutefois un tel procédé d'assemblage présente, à l'évidence, des inconvénients inhérents du fait qu'il exige le perçage préalable d'avant-trous borgnes dans la surface supérieure de l'engin de glisse, en repérant la position de ces avant-trous au moyen d'un gabarit, puis la mise en place manuelle de chaque vis dans chaque trou de la pièce rapportée et son engagement partiel dans l'avant-trou correspondant et enfin le vissage des différentes vis en utilisant un tournevis manuel ou électrique. Il est donc évident qu'un tel procédé d'assemblage d'une pièce rapportée sur un engin de glisse qui exige plusieurs opérations successives, prend un temps de main d'oeuvre important et la présente invention vise à remédier à cet inconvénient majeur. D'autre part, le vissage a pour autre inconvénient de fragiliser la structure du ski.

Comme autre procédé d'assemblage utilisé dans le domaine du ski, on connaît d'après le document FR-A-2 627 700, un procédé pour assembler par thermofusion de sous-ensembles constitutifs de la structure interne d'un ski alpin.

Selon ce procédé, les sous-ensembles sont revêtus respectivement d'une couche mince de matériau thermoplastique. Les sous-ensembles sont appliqués l'un contre l'autre de façon à plaquer l'une contre l'autre les couches de matériau thermofusible.

L'assemblage est réalisé en échauffant les couches de façon à provoquer leur fusion.

Ce procédé toutefois concerne l'assemblage d'éléments constituant la structure interne d'un ski. De plus, ces éléments présentent une nature identique ou relativement proche, que ce soit au niveau de leurs dimensions ou de leur structure propre.

Le procédé d'assemblage d'un élément de fixation et d'un engin de glisse, tel qu'un ski similaire, selon l'invention, est caractérisé en ce qu'on prévoit, au moins localement sur l'engin de glisse et sur l'élément de fixation deux surfaces de liaison destinées à venir en contact l'une avec l'autre, constituées respectivement par une couche de matière thermofusible, on provoque un échauffement des deux couches de matière thermofusible en contact l'une avec l'autre de manière à les porter à une température supérieure au point de fusion de la matière thermofusible de chaque couche en contact, tout en appliquant sous pression l'élément de fixation sur l'engin de glisse, et on laisse ensuite refroidir la matière fondue qui, en durcissant à nouveau, constitue une couche d'adhésion entre l'engin de glisse et l'élément de fixation.

De préférence on provoque l'échauffement de la matière thermofusible en soumettant l'engin de glisse et l'élément de fixation à un mouvement de vibration relatif se traduisant, dans la zone de contact entre eux, par une friction alternative produisant l'échauffement progressif et la fusion de la matière thermofusible.

Pour la mise en oeuvre du procédé suivant l'invention, les surfaces en contact de l'engin de glisse et de l'élément de fixation doivent être de nature compatible, c'est-à-dire que les couches en contact doivent pouvoir être mises respectivement en fusion par friction alternative, sous pression, de l'engin de glisse et de l'élément de fixation l'un sur l'autre, et qu'après fusion les deux couches puissent se mélanger intimement de manière à ne former qu'une couche homogène.

L'engin de glisse et l'élément de fixation peuvent être réalisés chacun en totalité en matière thermofusible ou bien encore ils peuvent être constitués de n'importe quelle matière non thermofusible, cette matière étant toutefois revêtue d'une couche superficielle en matière thermofusible dans la zone de liaison entre eux deux.

Les matières thermofusibles présentes sur les surfaces, venant en contact, de l'engin de glisse et de l'élément de fixation peuvent être de même nature ou de natures différentes, à condition, dans ce dernier cas, qu'elles soient compatibles.

Une matière thermofusible qui s'est révélée particulièrement bien convenir pour la mise en oeuvre du procédé suivant l'invention, est le polyamide, de préférence un polyamide 11 ou 12 connu sous le nom de "RILSAN". Toutefois d'autres matières thermofusibles pourraient également convenir et on pourrait également utiliser n'importe quel polymère, renforcé ou non, utilisé couramment pour l'assemblage de pièces en matière plastique par la technique de soudage par vibration. De même deux surfaces en aluminium peuvent adhérer entre elles par ce procédé.

On décrira ci-après, à titre d'exemple non limitatif, diverses formes d'exécution de la présente invention, en référence au dessin annexé sur lequel :
La figure 1 est une vue en perspective schématique illustrant les différentes phases du procédé d'assemblage suivant l'invention.
La figure 2 est une vue en élévation schématique d'un appareil de soudage par vibration pouvant être utilisé pour la mise en oeuvre du procédé suivant l'invention, appliqué à l'assemblage d'une glissière sur la surface supérieure d'un ski.
La figure 3 est une vue en coupe verticale et transversale d'un ski portant, sur sa face supérieure, une glissière assemblée avec le ski après la mise en oeuvre du procédé suivant l'invention.
La figure 4 est une vue en coupe verticale et transversale d'une variante d'exécution d'une glissière avant son assemblage avec un ski.
La figure 5 est une vue en perspective de la face inférieure d'une glissière destinée à être assemblée avec un ski.
La figure 6 est une vue en coupe verticale et transversale d'un ski de fond à arête centrale et d'un élément de fixation destiné à être assemblé avec le ski, sur son arête centrale.
La figure 7 est une vue en plan d'un ski adapté pour la mise en oeuvre du procédé d'assemblage suivant l'invention.
La figure 8 est une vue en coupe verticale et transversale, à plus grande échelle, faite suivant la ligne VIII-VIII de la figure 7.

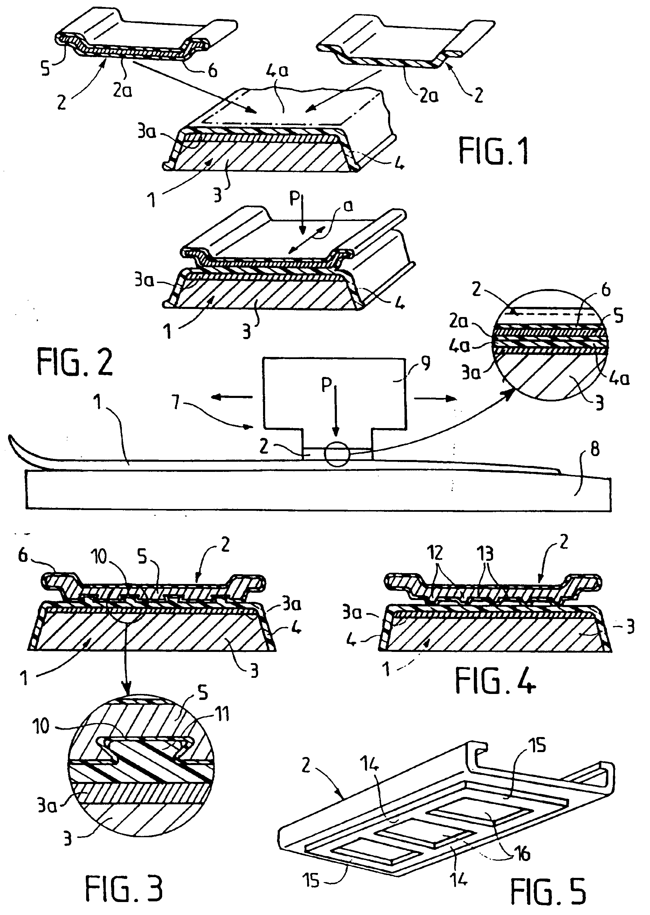

La figure 1 illustre schématiquement les diverses opérations conduisant à l'assemblage d'un engin de glisse sur neige 1, en l'occurrence d'un ski, avec une pièce rapportée 2 qui est constituée, dans cet exemple particulier, par une glissière longitudinale d'une fixation de sécurité. Le ski 1 et la glissière 2 sont adaptés, pour permettre la mise en oeuvre du procédé suivant l'invention, de manière à présenter, au moins dans la zone où doit avoir lieu leur liaison, des couches de matière thermofusible venant en contact l'une avec l'autre. A cet effet le ski 1 comporte un noyau 3, constitué d'un matériau couramment utilisé, tel que bois, métal, matière plastique de type polyuréthane chargée ou non d'une ou plusieurs couches de renfort 3a, généralement métallique en aluminium par exemple ou composé de fibres de verre, carbone, aramide ou autre, imprégnées de matrice thermodurcissable ou thermoplastique. Ce renfort 3a est lui-même revêtu d'une couche 4 d'une matière thermofusible. Cette couche 4 peut revêtir la totalité de la face horizontale supérieure du ski 1, en constituant une couche de liaison 4a, et de ses faces latérales inclinées, ou bien uniquement la surface supérieure à l'endroit où doit être montée la glissière 2. De son côté cette glissière 2 peut être réalisée en totalité en matière thermofusible, en présentant alors une face horizontale 2a constituant, par elle-même, une couche de liaison avec le ski 1, comme il est représenté dans la partie droite de la figure 1. Elle peut être également constituée par une pièce composite, telle que représentée dans la partie gauche de la figure 1, en comprenant alors un renfort interne 5 en tout matériau approprié, (métal, matière plastique, etc) recouverte d'un revêtement externe 6. La couche horizontale inférieure de ce revêtement 6 forme alors la couche de liaison 2a, en matière thermofusible, intervenant dans le procédé d'assemblage. Cette pièce composite, à renfort 5 et revêtement 6 en matière thermofusible, peut être réalisée par une technique de biinjection, c'est-à-dire d'injections successives dans un moule des deux matières différentes qui adhèrent par soudure ou collage ou encore par coextrusion, lorsqu'il s'agit d'une pièce relativement simple, plane par exemple. Ceci peut être aussi réalisé par surmoulage de l'enveloppe 6, de matière thermofusible autour du renfort 5 en un matériau quelconque. Dans le cas de revêtement appliqué à des pièces métalliques, on peut utiliser une méthode connue par projection électrostatique ou par trempage dans un bain fluidisé par exemple.

Pour réaliser l'assemblage du ski 1 et de la glissière 2, on place cette glissière, dans la position longitudinale appropriée, sur la face horizontale supérieure du ski 1 de manière que les deux couches de liaison 2a et 4a, en matière thermofusible soient en contact l'une avec l'autre. On applique ensuite, sous pression l'un contre l'autre, le ski 1 et la glissière 2. Dans une forme de mise en oeuvre préférée de l'invention on utilise un appareil de soudage par vibration 7 d'un type connu qui est représenté schématiquement sur la figure 2. Cet appareil de soudage 7 comporte un plateau inférieur fixe 8 et un plateau supérieur mobile 9 qui est soumis à une vibration par des moyens appropriés non représentés. Pour la mise en oeuvre du procédé suivant l'invention en utilisant un tel appareil, on immobilise le ski 1 sur le plateau fixe inférieur 8, en l'alignant dans la direction de la vibration du plateau supérieur mobile 9, et on exerce une pression verticale P, de haut en bas, sur la glissière 2 placée préalablement dans la position longitudinale appropriée sur le ski 1. Ensuite on fait vibrer longitudinalement le plateau mobile supérieur 9 et par conséquent la glissière 2, par rapport au ski inférieur 1 immobilisé, tout en maintenant la pression P. Le mouvement de vibration longitudinal de la glissière 2 sur le ski 1 se traduit par une friction alternative de la couche de matière thermofusible 2a de la glissière mobile 2 sur la couche de matière thermofusible 4a du ski fixe 1. Cette friction alternative provoque un échauffement progressif des deux couches 2a et 4a et la durée de la phase du mouvement de vibration longitudinal de la glissière 2 est choisie suffisante (de l'ordre de quelques secondes) pour que la température atteinte par les deux couches de matière thermofusible 2a et 4a soit supérieure à leur point de fusion. Ces deux couches fondent alors et elles se mélangent intimement, sous l'effet de la pression P, pour ne plus former qu'une couche homogène. Cette pression P est maintenue pendant une courte période de temps, de l'ordre de quelques secondes, après la cessation du mouvement de vibration longitudinal, pour permettre le refroidissement et la solidification de la couche de liaison homogène précédemment en fusion et l'obtention d'une couche rigide et robuste entre le ski 1 et la glissière 2.

Bien qu'il soit préférable, dans la plupart des cas, de provoquer l'échauffement de la matière thermofusible par une friction alternative dans le sens longitudinal de l'engin de glisse 1, on pourrait aussi obtenir ce résultat en produisant la vibration, engendrant la friction, dans le sens transversal.

De préférence les couches de matière thermofusible 2a et 4a assurant la liaison entre le ski 1 et la glissière 2 sont en polyamide "11" ou "12" connu sous le nom de "RILSAN". En effet cette matière présente l'avantage de passer rapidement de l'état solide à l'état liquide, pratiquement sans état pâteux intermédiaire, et son point de fusion est précis. Par ailleurs, à l'état liquide, elle flue de façon à combler des creux éventuels et on obtient par conséquent une égalisation des surfaces du ski 1 et de la glissière 2.

A titre d'exemple on a mis en oeuvre le procédé suivant l'invention avec un ski 1 à revêtement externe en "RILSAN", et avec une glissière 2 à renfort 5 en aluminium recouverte d'un revêtement 6 en "RILSAN". Ce revêtement a été obtenu par un procédé connu de projection électrostatique, l'épaisseur du revêtement 6 de "RILSAN", et notamment de la couche de liaison 2a étant d'environ 150 micromètres. Le revêtement 6 en "RILSAN" peut être aussi obtenu par trempage en bain fluidisé. La pression P exercée pendant la friction alternative a été créée par une force de pression verticale de 800 daN. On a soumis la glissière 2 à un mouvement de vibration dans la direction longitudinale du ski, avec une amplitude ± 0,75 millimètre, avec une fréquence de 240 hertz, pendant une durée de 4 secondes. On a effectué divers essais en supprimant la pression P, immédiatement après la phase du mouvement de vibration longitudinal, ou en la maintenant encore pendant une durée allant jusqu'à 5 secondes après la cessation du mouvement de vibration. Avec ce procédé on a obtenu une résistance à l'arrachement, dans le sens vertical, entre le ski 1 et la glissière 2 de l'ordre de grandeur de celle obtenue avec un assemblage au moyen de vis.

La face de la pièce rapportée 2 qui vient en contact avec le ski 1, peut être adaptée de manière à renforcer l'adhérence. Par exemple, ainsi qu'il est représenté sur la figure 3, la surface inférieure de la glissière 2 présente des rainures longitudinales (et/ou transversales) 10 à section droite en forme de queue d'aronde. De ce fait, lors de la friction alternative, la matière thermofusible des deux couches de liaison 2a et 4a pénètre, après sa fusion et sous l'effet de la pression, à l'intérieur des rainures 11, ce qui permet de résorber la matière en excès de fusion et d'améliorer l'accrochage de la glissière 2 sur le ski 1 par un ancrage mécanique résultant des plots d'accrochage 11 constitués par la matière ayant flué et durci dans les rainures 10.

Suivant une variante, la surface inférieure de la glissière 2 peut présenter des nervures en saillie, comme il est représenté sur les figures 4 et 5. Sur la figure 4 la face inférieure de la glissière 2 présente des nervures longitudinales (et/ou transversales) 12 délimitant entre elles des creux 13. De ce fait le contact, la friction et la soudure sont concentrés à l'endroit des nervures 12 et la matière thermofusible en excès peut fluer dans les creux 13 situés entre les nervures 12.

La figure 5 illustre une variante d'exécution dans laquelle la face inférieure de la glissière 2 présente deux nervures longitudinales 14, proches des bords longitudinaux de la glissière 2, et qui sont reliées par des nervures transversales 15, en délimitant entre elles des creux 16 dans lesquels peut fluer la matière thermofusible en fusion. Les nervures peuvent aussi être présentes à la surface supérieure du ski.

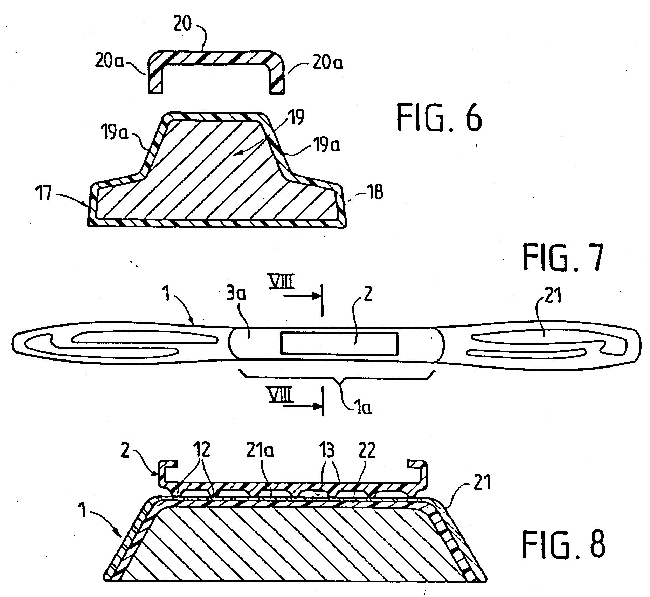

La figure 6 illustre une application du procédé suivant l'invention à un ski de fond 17, comportant un noyau interne revêtu d'une enveloppe externe 18 constitué d'une couche de matière thermofusible telle que le "RILSAN". Le ski de fond 17 présente, à sa partie supérieure, une arête longitudinale centrale 19, destinée à être coiffée par une pièce rapportée 20 constituant une plaque d'appui pour une chaussure de ski de fond. Cette plaque d'appui 20 est constituée en totalité, en "RILSAN", comme il est représenté sur la figure 6, ou bien encore elle est formée par une pièce composite à revêtement externe en "RILSAN". L'arête 19 du ski de fond 17 présente une section transversale trapézoïdale, à faces latérales inclinées 19a convergeant vers le haut, et de la même façon la plaque d'appui rapportée 20 a une section transversale verticale en forme de U ou de C ouvert vers le bas. Les deux branches latérales 20a de la plaque d'appui rapportée 20, qui s'étendent vers le bas, sont verticales ou légèrement convergentes vers le haut. Ces deux branches 20a sont inclinées l'une par rapport à l'autre d'un angle qui est inférieur à l'angle dont sont inclinées l'une par rapport à l'autre, les deux faces latérales 19a de l'arête 19. Comme dans l'exemple décrit précédemment, lors de la mise en oeuvre du procédé d'assemblage, l'élément de fixation supérieur 20 est appliqué sous pression sur l'arête 19 si bien que ses branches latérales inférieures 20a sont écartées vers l'extérieur, du fait de leur inclinaison relative différente de celle des faces latérales inclinées 19a de l'arête 19, si bien qu'elles sont ainsi fortement pressées contre ces dernières faces 19a. Pour assurer l'assemblage du ski 17 et de l'élément de fixation 20, on a exercé, pour produire la pression de contact, une force verticale de 600 daN, l'amplitude du mouvement de vibration longitudinal a été de + 0,6 millimètre et la durée du mouvement de vibration a été de 3 à 4 secondes.

On peut utiliser, pour la mise en oeuvre du procédé suivant l'invention, des couches de matière thermofusible qui sont ou non chargées. Par exemple la glissière rapportée 2 peut être réalisée en "RILSAN" chargé de fibres. Dans ce cas on peut utiliser, pour la glissière rapportée 2, un pourcentage de fibres (par exemple 15%) inférieur à celui (35%) ou plus qui est couramment utilisé pour la fabrication de glissières assemblées avec un ski au moyen de vis. Cette réduction notable du pourcentage des fibres permet, au moment de l'opération de soudage par friction alternative, une meilleure pénétration du "RILSAN" fondu entre les fibres et un excellent accrochage de la glissière 2 sur le ski 1. On obtient également ainsi une amélioration de la souplesse de la glissière, grâce à l'abaissement de la proportion de fibres, et par conséquent une diminution des contraintes entre la glissière 2 et le ski 1, notamment dans les mouvements de flexion du ski. En effet, dans le cas d'une glissière 2 maintenue par des vis, toute sollicitation apparaissant entre la glissière 2 et le ski 1 converge vers les différentes vis de fixation. Au contraire dans le cas d'une glissière fixée par soudage, les sollicitations se répartissent sur l'ensemble de la surface de contact entre la glissière 2 et le ski 1.

La figure 7 représente une variante selon laquelle la décoration du ski est portée par une couche de matériau 21 qui n'est pas compatible avec la soudure par vibration. Dans le mode de réalisation illustré, la couche de matériau 21 est présente à l'avant du ski, à l'arrière du ski, mais pas dans la zone centrale 1a du patin du ski. Dans cette zone la, le renfort 3a du ski est directement accessible. Avantageusement, ce renfort est en matériau compatible avec la glissière 2, pour une soudure par vibration. Il est donc possible d'appliquer et souder par vibration la glissière 2 sur le renfort 3a. Cette variante est aussi applicable au cas où le renfort 3a est accessible directement d'un bout à l'autre du ski.

La figure 8 représente un ski 1 dont le revêtement 21, approprié pour la décoration du ski, n'est pas réalisé en une matière compatible convenant pour le soudage par vibration. Dans ce cas, on forme le revêtement non compatible 21 de manière qu'il soit très fin dans la zone où doit s'effectuer l'assemblage de la pièce rapportée 2, c'est-à-dire la zone du patin du ski dans le cas de la fixation d'une glissière 2, et qu'il se présente, à cet endroit, sous la forme d'une mince pellicule 21a. Sous cette pellicule 21a se trouve un insert 22 qui est réalisé en toute matière compatible avec la pièce rapportée 2 assemblée par soudage par vibration. Dans ce cas la première partie de la phase de friction de la pièce rapportée 2 sur le ski a pour effet de détruire, au moins localement, la pellicule superficielle 21a, de telle façon que l'insert en matériau compatible 22 soit ensuite accessible. Il est particulièrement avantageux que la pièce rapportée 2 (ou le ski 1) présente des nervures en saillie 12, comme il est représenté par exemple sur les figures 4 et 5, afin de concentrer localement la friction et de permettre l'écoulement du matériau non compatible de la pellicule 21a dans les creux 13 délimités par les nervures.

Bien entendu, l'invention ne se limite pas aux modes de réalisation présentés à titre d'exemple, ainsi on peut imaginer le cas où les couches renforts 3a formant la structure de l'engin de glisse ont une matrice thermoplastique chargée, compatible avec l'élément de fixation à rapporter. Dans ce cas on peut se dispenser de la couche 4 thermofusible. L'élément de fixation est directement appliqué et soudé par friction sur le renfort 3a.

## Revendications

1. Procédé d'assemblage sur un engin de glisse (1) tel qu'un ski ou article similaire, d'un élément de fixation (2) étranger à la structure interne de l'engin de glisse (1), caractérisé en ce qu'on prévoit au moins localement sur l'engin de glisse (1) et sur l'élément de fixation (2) deux surfaces de liaison destinées à venir en contact l'une avec l'autre, constituées respectivement par une couche de matière thermofusible (2a, 4a) on provoque un échauffement des deux couches de matière thermofusible (2a, 4a) en contact l'une avec l'autre de manière à les porter à une température supérieure au point de fusion de la matière thermofusible, tout en appliquant sous pression (P) l'élément de fixation sur l'engin de glisse (1), et on laisse ensuite refroidir la matière fondue qui, en durcissant à nouveau, constitue une couche d'adhésion entre l'engin de glisse (1) et l'élément de fixation (2).

2. Procédé suivant la revendication 1, caractérisé en ce qu'on provoque l'échauffement de la matière thermofusible en soumettant l'engin de glisse (1) et l'élément de fixation (2) à un mouvement de vibration relatif se traduisant, dans la zone de contact entre eux, par une friction alternative produisant l'échauffement et la fusion de la matière thermofusible.

3. Procédé suivant la revendication 2, caractérisé en ce qu'on soumet l'engin de glisse (1) et l'élément de fixation à un mouvement de vibration relatif dans le sens longitudinal ou transversal de l'engin de glisse (1).

4. Procédé suivant l'une quelconque des revendications 2 et 3, caractérisé en ce qu'on maintient sous pression l'engin de glisse (1) et l'élément de fixation pendant un certain temps après la cessation du mouvement de vibration relatif entre l'engin de glisse (1) et l'élément de fixation (2).

5. Procédé suivant l'une quelconque des revendications précédentes, caractérisé en ce qu'on utilise un engin de glisse (1) et/ou un élément de fixation (2) réalisés chacun en totalité en une matière thermofusible.

6. Procédé suivant l'une quelconque des revendications 1 à 4, caractérisé en ce qu'on utilise un engin de glisse (1) et/ou un élément de fixation (2) constitués en un matériau (3, 5) non thermofusible revêtu d'une couche superficielle (4, 6) en matière thermofusible.

7. Procédé suivant la revendication 6, caractérisé en ce que la couche superficielle (4, 6) est obtenue par projection électrostatique ou par trempage dans un bain fluidisé.

8. Procédé suivant la revendication 6, caractérisé en ce que la couche superficielle (4, 6) est obtenue par biinjection ou coextrusion.

9. Procédé suivant l'une quelconque des revendications précédentes, caractérisé en ce que les faces de contact de l'élément de fixation ou de l'engin de glisse sont munies de nervures et/ou de rainures.

10. Procédé suivant l'une quelconque des revendications précédentes, caractérisé en ce qu'on utilise un élément de fixation (2) dont la face venant en contact avec l'engin de glisse (1) est creusée de rainures longitudinales (et/ou transversales) (10) à section droite en forme de queue d'aronde.

11. Procédé suivant l'une quelconque des revendications 1 à 9, caractérisé en ce qu'on utilise un élément de fixation (2) et un engin de glisse dont au moins une des faces en contact présente des nervures longitudinales et/ou transversales (12, 14, 15) qui délimitent entre eux des creux (13, 16).

12. Procédé suivant l'une quelconque des revendications 1 à 11, appliqué à l'assemblage d'un ski (17), présentant, à sa partie supérieure, une arête longitudinale centrale (19), et d'un élément de fixation (20) constituant une plaque d'appui pour une chaussure de ski, coiffant l'arête (19) du ski (17), caractérisé en ce qu'on utilise un ski (17) comportant une enveloppe externe (18) en matière thermofusible et la plaque d'appui rapportée (20) qui vient coiffer l'arête (19) du ski, a une section transversale verticale en forme de U ou de C ouvert vers le bas.

13. Procédé suivant la revendication 12, caractérisé en ce que les deux branches latérales (20a) de la plaque d'appui rapportée (20) qui s'étendent vers le bas, sont inclinées, l'une par rapport à l'autre, d'un angle qui est inférieur à l'angle dont sont inclinées, l'une par rapport à l'autre, les deux faces latérales (19a) de l'arête (19) du ski (17).

14. Procédé suivant l'une quelconque des revendications 2 à 9, appliqué à un engin de glisse (1) dont le revêtement (21) n'est pas réalisé en une matière compatible convenant pour le soudage par vibration, caractérisé en ce qu'on prévoit, dans la zone où doit s'effectuer l'assemblage de l'élément de fixation (2), un insert sur l'engin de glisse.

15. Procédé suivant la revendication 14, caractérisé en ce qu'on forme le revêtement non compatible (21) de manière qu'il se présente, dans la zone où doit s'effectuer l'assemblage de l'élément de fixation (2) sous la forme d'une mince pellicule (21a) pouvant être détruite pendant la première partie de la phase de friction entre l'élément de fixation (2) et l'engin de glisse (1), et on prévoit, sous la mince pellicule (21a), un insert (22) réalisé en une matière thermofusible compatible.

16. Procédé suivant l'une quelconque des revendications précédentes, caractérisé en ce qu'on utilise, en tant que matière thermofusible, un polyamide.

## Claims

1. Method of assembling on a sliding device (1), such as a ski or similar article, a binding element (2), characterized in that two connecting surfaces are provided, at least locally on the sliding device (1) and on the binding element (2), such surfaces adapted to come into contact with one another, and respectively constituted by a layer of thermofusible material (2a, 4a), wherein the two layers of thermofusible material (2a, 4a) in contact with one another are heated so as to bring them a temperature greater than the melting point of the thermofusible material, while applying under pressure (P) the binding element to the sliding device (1), and thereafter the melted material is left to cool, which, when it rehardens, constitutes an adhesive layer between the sliding device (1) and binding element (2).

2. Method as defined by claim 1 characterized in that the heating of the thermofusible material is caused by subjecting the sliding device (1) and the binding element (2) to a relative vibrational movement, which is translated, in the contact zone between them, by an alternative friction producing the heating and the melting of the thermofusible material.

3. Method as defined by claim 2 characterized in that the sliding device (1) and the binding element are subjected to a relative vibrational movement in the longitudinal or transverse direction of the sliding device (1).

4. Method as defined by any of claims 2 and 3 characterized in that the sliding device (1) and the binding element are maintained under pressure during a certain amount of time after the relative vibrational movement between the sliding device (1) and the binding element (2) has ended.

5. Method as defined by any of the preceding claims, characterized in that a sliding device (1) and/or a binding element (2) each made in their entirety of a thermofusible material are used.

6. Method as defined by any of claims 1 to 4 characterized in that a sliding device (1) and/or a binding element (2) constituted of a material (3, 5) which is nonthermofusible, coated with a superficial layer (4, 6) made of a thermofusible material are used.

7. Method as defined by claim 6, characterized in that the superficial layer (4, 6) is obtained by electrostatic projection or by quenching in a fluidized bath.

8. Method as defined by claim 6, characterized in that the superficial layer (4, 6) is obtained by bi-injection or co-extrusion.

9. Method as defined by any of the preceding claims characterized in that the contact faces of the binding element or the sliding device are provided with ribs and/or grooves.

10. Method as defined by any of the preceding claims characterized in that a binding element (2) is used whose face which comes into contact with the sliding device (1) is dug with longitudinal grooves (and/or transverse) (10) having a right angle section shaped like a dove-tail.

11. Method as defined by any of claims 1 to 9 characterized in that a binding element (2) and a sliding device are used of which at least one of the contact faces has longitudinal and/or transverse ribs (12, 14, 15) which demarcate hollows (13, 16) therebetween (13, 16).

12. Method as defined by any of claims 1 to 11, applied to the assembly of a ski (17), having, at its upper portion, a central longitudinal edge (19), and of a binding element (20) constituting a support element for a ski boot, brushing the edge (19) of ski (17), characterized in that one uses a ski (17) comprising an external envelope (18) made of a thermofusible material and the attached support element (20) which brushes edge (19) of the ski has a vertical transverse section shaped like an U or C open downwardly.

13. Method as defined by claim 12, wherein the two lateral arms (20a) of the attached support element (20) which extend downwardly are inclined with respect to one another at an angle which is less than the angle at which are inclined with respect to one another the two lateral faces (19a) of edge (19) of ski (17).

14. Method as defined by any of claims 2 to 9, applied to a sliding device (1) whose coating (21) is not made of a compatible material appropriate for vibration welding, characterized in that it is provided with an insert on the sliding device, in the zone in which assembly of the binding element (2) must be undertaken.

15. Method as defined by claim 14, characterized in that the non compatible coating (21) is formed in such a way that it has, in the zone in which the assembly of the binding element (2) must be undertaken, in the form of a thin film (21a) that can be destroyed during the first part of the friction phase between the binding element (2) and the sliding device (1), and an insert (22), made of a compatible thermofusible material, is provided beneath the thin film (21a).

16. Method as defined by any of the preceding claims characterized in that a polyamide is used as a thermofusible material.

## Patentansprüche

1. Verfahren zur Montage auf einem Gleitgerät (1), wie einem Ski oder einem ähnlichen Gegenstand, eines Bindungselementes (2), dadurch gekennzeichnet, daß man zumindest lokal auf dem Gleitgerät (1) und auf dem Bindungselement (2) zwei Verbindungsoberflächen vorsieht, die dazu bestimmt sind in Kontakt miteinander zu kommen, die jeweils durch eine Schicht von wärmeschmelzbarem Material (2a, 4a) gebildet sind, daß man eine Erhitzung der beiden Schichten von wärmeschmelzbarem Material (2a, 4a), die miteinander in Kontakt sind, bewirkt, um sie auf eine Temperatur oberhalb des Schmelzpunktes des wärmeschmelzbaren Materials zu bringen, wobei das Bindungselement unter Druck (P) auf das Gleitgerät (1) aufgedrückt wird, und daß man dann die geschmolzene Materie abkühlen läßt, die, beim Wiederhartwerden, eine Haftschicht zwischen dem Gleitgerät (1) und dem Bindungselement (2) bildet.

2. Verfahren gemäß Anspruch 1, dadurch gekennzeichnet, daß man die Erhitzung des warmeschmelzbaren Materials bewirkt durch Unterwerfen des Gleitgerätes (1) und des Bindungselementes (2) einer relativen Vibrationsbewegung, die sich in der Kontaktzone zwischen ihnen durch eine abwechselnde Reibung äußert, die die Erhitzung und das Schmelzen des wärmeschmelzbaren Materials erzeugt.

3. Verfahren gemäß Anspruch 2, dadurch gekennzeichnet, daß man das Gleitgerät (1) und das Bindungselement einer relativen Vibrationsbewegung in der longitudinalen oder transversalen Richtung des Gleitgerätes (1) unterwirft.

4. Verfahren gemäß einem der Ansprüche 2 und 3, dadurch gekennzeichnet, daß man das Gleitgerät (1) und das Bindungselement während einer bestimmten Zeit nach der Beendigung der relativen Vibrationsbewegung zwischen dem Gleitgerät (1) und dem Einsatzstück (2) unter Druck hält.

5. Verfahren gemäß einem der vorhergehenden Ansprüche, dadurch gekennzeichnet, daß man ein Gleitgerät (1) und/oder ein Bindungselement (2) verwendet, von denen jedes vollständig aus einem wärmeschmelzbaren Material besteht.

6. Verfahren gemäß einem der Ansprüche 1 bis 4, dadurch gekennzeichnet, daß man ein Gleitgerät (1) und/oder ein Bindungselement (2) verwendet, die aus einem nicht-warmeschmelzbarem Material (3, 5) gebildet sind, das mit einer oberflächlichen Schicht (4, 6) aus wärmeschmelzbarem Material überzogen ist.

7. Verfahren gemäß Anspruch 6, dadurch gekennzeichnet, daß die oberflächliche Schicht (4, 6) durch elektrostatische Projektion oder durch Eintauchen in ein fluidisiertes Bad erhalten wird.

8. Verfahren gemäß Anspruch 6, dadurch gekennzeichnet, daß die oberflächliche Schicht (4,6) durch Biinjektion oder Koextrusion erhalten wird.

9. Verfahren gemäß einem der vorhergehenden Ansprüche, dadurch gekennzeichnet, daß die Kontaktoberflächen des Bindungselementes oder des Gleitgerätes mit Rippen und/oder Rillen versehen sind.

10. Verfahren gemäß einem der vorhergehenden Ansprüche, dadurch gekennzeichnet, daß man ein Bindungselement (2) verwendet, dessen Oberfläche, die in Kontakt mit dem Gleitgerät (1) kommt, von longitudinalen (und/oder transversalen) Rillen (10) von geradem Durchschnitt in Schwalbenschwanzform ausgehöhlt ist.

11. Verfahren gemäß einem der Ansprüche 1 bis 9, dadurch gekennzeichnet, daß man ein Bindungselement (2) und ein Gleitgerät verwendet, bei denen zumindest eine der Oberflächen in Kontakt longitudinale und/oder transversale Rippen (12, 14, 15) aufweist, die zwischen sich Ausnehmungen (13, 16) begrenzen.

12. Verfahren gemäß einem der Ansprüche 1 bis 11, angewandt auf die Montage eines Skis (17), der an seinem Oberteil einen longitudinalen zentralen Steg (19) aufweist, und auf ein Bindungselement (20), das eine Lagerplatte für einen Skischuh bildet, das den Steg (19) des Skis (17) überdeckt, dadurch gekennzeichnet, daß man einen Ski (17) verwendet, der eine externe Umhüllung (18) aus wärmeschmelzbarem Material aufweist, und daß die eingesetzte Lagerplatte (20), die den Steg (19) überdeckt, einen transversalen vertikalen U- oder C-förmigen nach unten offenen Querschnitt hat.

13. Verfahren gemäß Anspruch 12, dadurch gekennzeichnet, daß die beiden seitlichen Schenkel (20a) der eingesetzten Lagerplatte (20), die sich nach unten erstrecken, eine bezüglich der anderen um einen Winkel geneigt sind, der kleiner als der Winkel ist, um den die beiden seitlichen Flächen (19a) des Steges (19) des Skis (17) eine bezüglich der anderen geneigt sind.

14. Verfahren gemäß einem der Ansprüche 2 bis 9, angewandt auf ein Gleitgerät (1), dessen Überzug (21) nicht aus einem kompatiblen Material, das geeignet für das Vibrationsschweißen ist, besteht, dadurch gekennzeichnet, daß man in der Zone, in der die Montage des Bindungselementes (2) stattfinden soll, einen Einsatz auf dem Gleitgerät vorsieht.

15. Verfahren gemäß Anspruch 14, dadurch gekennzeichnet, daß man den Überzug (21) nicht kompatibel bildet, so daß er in der Zone, in der die Montage des Bindungselementes (2) stattfinden soll, in Form einer dünnen Haut (21a) vorliegt, die während dem ersten Teil der Reibungsphase zwischen dem Bindungselement (2) und dem Gleitgerät (1) zerstört werden kann, und dab man unter der dünnen Haut (21a) einen Einsatz (22) vorsieht, der aus einem kompatiblen warmeschmelzbaren Material besteht.

16. Verfahren gemäß einem der vorhergehenden Ansprüche, dadurch gekennzeichnet, daß man als wärmeschmelzbares Material ein Polyamid verwendet.
